# EUROPEAN PATENT SPECIFICATION

(11) **EP 1 744 998 B1**
(45) Date of publication and mention of the grant of the patent: **27.02.2008**
(21) Application number: 05722321.6
(22) Date of filing: 11.04.2005
(51) Int. Cl.: C04B 40/00, C04B 7/52, C04B 18/08

(54) **PROCESSING SYSTEM FOR MANUFACTURING COMPOSITE CEMENTITIOUS MATERIALS WITH REDUCED CARBON DIOXIDE EMISSIONS**
VERARBEITUNGSSYSTEM ZUR HERSTELLUNG VON ZEMENTHALTIGEN VERBUNDMATERIALIEN MIT VERRINGERTEN KOHLENDIOXIDEMISSIONEN
SYSTEME DE TRAITEMENT DE MATIERES CEMENTEUSES COMPOSITES A FAIBLES EMISSIONS DE DIOXYDE DE CARBONE

(30) Priority: 13.05.2004 SE 0401238
(43) Date of publication of application: 24.01.2007
(73) Proprietor: Procedo Enterprises Etablissement, 9490 Vaduz (LI)
(72) Inventor: RONIN, Vladimir, S-973 32 Luleå (SE)
(74) Representative: Örtenblad, Bertil Tore
(86) International application number: PCT/SE2005/000517
(87) International publication number: WO 2005/110945

(56) References cited:
- WO-A1-97/16389
- WO-A1-98/24733
- US-A- 5 695 130

## Description

The present invention relates to the processing arrangement for manufacturing composite cementitious materials as is set out in claim 1 and is characterized by significantly improved environmental profile.

It is well known that each ton of production of Standard Portland Cement is accompanied by the release of about one ton of carbon dioxide and that about half of this comes from the decarbonation of limestone in the kiln and the other half from energy consumption, primarily in the kiln.

It follows that the only way in which the cement industry can achieve meaningful reductions in carbon dioxide emissions is via reduction of Portland clinker production and an increased use of fillers.

The traditional plants for production of blended cement include intergrinding of Portland cement clinker with different types of microfillers, e.g. blast furnace slag, fly ash, limestone, etc. mainly in the rotating ball mills. Such methods are not providing more than 20-25% of Portland clinker replacement by fly ash and approximately 30-50% by blast furnace slag, without a significant negative influence on the cement performance, such as a sharp increase of setting time, a very low strength development during the curing period 0-28 days, etc. It takes up to 3 times longer time, such as 2 - 3 months, to achieve a 28-days strength of traditionally Portland cement concretes.

At the same time high volume fly ash (HVFA) cements do have significant benefits in comparison with traditional Portland cements.

Introduction of fly ash or other types of fillers, e.g. fines from granitic quarries or fines quartz sand for replacement of Portland cement directly in the concrete mixer in amounts more that 15-20% is not efficient and could negatively influence performance of the concrete (reduced strength, etc).

Existing methods of grinding and mechanical activation of said fillers could give some improvement, as described in US patent 6,630,022, but it looks economically ineffective and allows only a 20% of Portland cement replacement without a reduction of the concrete compressive strength.

In the application PCT/SE2003/001009 there is described a process for producing blended cement, where the cement contains Portland Cement mixed thoroughly with a microfiller and possibly a water reducing agent to a dry cement mixture and fine supplementary cementitious materials selected from the materials blast furnace slag, fly ash, quartz, silica and amorphous silicon dioxide. According to said application, supplementary materials are being subjected to a grinding in a dry state and the supplementary ground materials are then being subjected to a grinding together with at least 20 % by weight of the total grinding mass of a highly reactive cement mixture in a dry state. A polymer in the form of a powdery water-reducing agent is also added.

A problem in producing such a cement mixture is that in order to obtain the desired result, the fineness of the components must be strictly controlled. This is especially true for a plant where the cement mixture is produced in a continuous way.

The present invention offers such a plant.

The present invention thus refers to a processing arrangement for manufacturing composite cementitious materials, such as hydraulic blended cements with significantly reduced Portland clinker minerals content and correspondingly with an increased amount of supplementary cementitious materials and highly reactive pozzolans or mineral fillers, as e.g. fly ash, blast furnace slag, fine quartz, granitic quarry fines for direct replacement of Portland cement in concrete, comprising a silo for Portland cement, a silo for fly ash or other type of supplementary materials and a silo for cement kiln dust or other type of setting time regulating agent, a storage unit for polymer additive, proportioning means, mixing means, grinding devices and discharge means, and is characterised in that the arrangement is equipped with a milling unit (6) for pregrinding said supplementary materials and a milling equipment (9) for pregrinding the Portland cement, which pregrinding equipment (6,9) are followed by a grinding equipment (13) for grinding the preground components and in that said pregrinding equipment (6,9) are adapted to work as an open circuit or a closed circuit for the material being ground.

The invention will now be described in more detail below in connection with an exemplifying embodiment of the invention, where

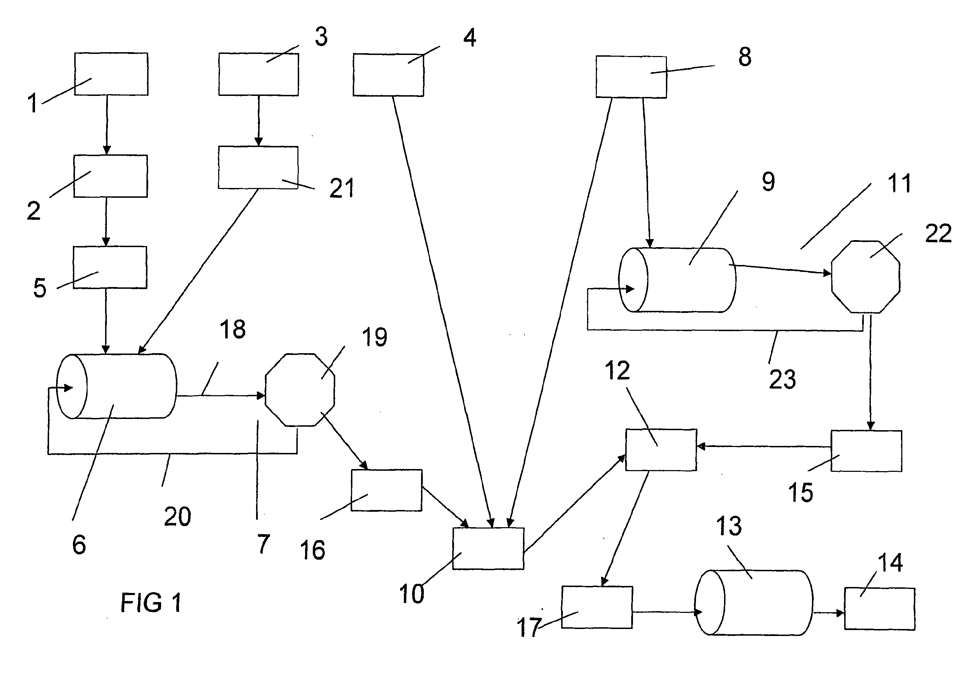

Figure 1 is schematically shows a processing system in accordance with the present invention.

In figure 1 the following reference numerals indicate the following apparatuses : 1 denotes a feed station for a drying unit, 2 denotes a drying unit (rotary dryer or fluid bed dryer), 3 denotes a silo for slag and/or fly ash, 4 denotes a silo for additives, 5 denotes a intermediate silo for dried sand, 6 denotes a milling unit for pre-grinding of quartz sand, 7 denotes an air classifier with cyclone and dust collector, 8 denotes a silo for Portland cement, 9 denotes a milling unit for pre-grinding of part of Portland cement before mixing with other components before processing, 10 denotes a intermediate silo for ungrounded part of Portland cement and preground sand, slag and additives, 19 denotes an air classifier with cyclone and dust collector, 12 denotes a rotary mixer, 13 denotes vibrating mills for processing of raw materials feed (installed parallel or in series), 14 denotes a silo for the final product, blended cement, 15 denotes an intermediate silo for pre-ground portion of cement and 16 denotes a silo for preground quartz and 17 denotes a silo for the mixture of materials prior to a final milling.

According to a preferred embodiment there is provided a unit 21 for carbon removal from fly ash, which unit is adapted to lower the carbon content in the fly ash below 4 weigth%. The unit may operate according to any suitable known technique for carbon removal.

As is apparent from the application the quartz in the above example can be any suitable supplementary material.

According to the above said, sand, slag, additives in the form of for example a water reducing agent and Portland cement is fed into the present arrangement.

Regarding the quartz, or sand, the sand is first fed from a feeding station 1 to a drying unit 2, where it is dried. Therafter it is fed to a silo 5. Slag, or any other suitable additive, is fed from a silo 3 to a conduit merging with a conduit from said silo 5 for sand. The mixture of sand and slag is fed to a milling unit 6. After that the sand and slag have been preground, the material is fed to a silo 16 and futher on to a silo 10.

Regarding the Portland cement, the cement is fed from a silo 8 to silo 10. Additives like water reducing agents are also fed to the last mentioned silo 10 as well as sand and slag being preground in the milling equipment 6. Portland cement is also fed from silo 8 to a milling equipment 9. From milling equipment 9 the cement is fed to a silo 15 for preground cement. The materials in silos 10 and 15 are fed to a rotary mixer 12 and further on to a silo 17.

From silo 17 the mixture of materials is fed to a final milling equipment 13. After being milled in equipment 13 the final material is fed to a silo 14.

According to the invention the arrangement is thus equipped with a milling unit 6 for pregrinding said supplementary materials and a milling equipment 9 for pregrinding the Portland cement, which pregrinding equipment are followed by a grinding equipment 13 for grinding of the preground components.

According to a very important feature of the present inventtion said pregrinding equipment 2, 9 are adapted to work as an open circuit or a closed circuit for the material being grinded. The closed circuit in milling equipment 6 comprises a conduit 18 from the milling equipment to an air classifier 19 being able to sort out to large fractions of the material being grinded back to the mill via a conduit 20.

The closed circuit in milling equipment 9 comprises in a corresponding way a conduit 11 from the milling equipment to an air classifier 22 being able to sort out to large fractions of the material being grinded back to the mill via a conduit 23.

To both milling equipments there are connected a cyclone and a dust collector. The material collected there is fed to a respective downstream silo in the main flow.

According to a preferred embodiment of the invention, the said milling equipment 6 for said supplementary material is arranged to pregrind the supplementary material to a fineness of 100 - 300 microns.

According to another preferred embodiment of the invention, the said milling equipment for portland cement is arranged to pregrind the Portland cement to a fineness of an average particle size of 10 - 30 microns.

Since only material fractions that are too large will be sorted out in the air classifiers, the circuits will be open when there are no such materials leaving the respective milling equipment 6, 9.

According to still another preferred embodiment, the arrangement comprises a unit for drying the supplementary material and fillers to a moisture content of less than 0.2 weigth%, which unit is located upstream of the milling equipment.

Thus, the present invention gives a production plant, or arrangement, in which production of the cement material mentioned in the introductory part of the application can be performed in a continuous way.

The scope of this invention should not be limited by the example presented by the drawings given above but rather by the following claims.

## Claims

1. A processing arrangement for manufacturing composite cementitious materials such as hydraulic blended cements with significantly reduced Portland clinker minerals content and correspondingly with an increased amount of supplementary cementitious materials and highly reactive pozzolans or mineral fillers as e.g. fly ash, blast furnace slag, fine quartz, granitic quarry fines for direct replacement of Portland cement in concrete, comprising a silo for Portland cement, a silo for fly ash or other type of supplementary materials and a silo for cement kiln dust or other type of setting time regulating agent, a storage unit for polymer additive, proportioning means, mixing means, grinding devices and discharge means, **characterised in that** the arrangement is equipped with a milling unit (6) for pregrinding said supplementary materials and a milling equipment (9) for pregrinding the Portland cement, which pregrinding equipments (6,9) are followed by a grinding equipment (13) for grinding the preground components and **in that** said pregrinding equipment (6,9) are adapted to work as an open circuit or a closed circuit for the material being ground.

2. A processing arrangement according to claim 1,
**characterised in, that** said closed circuit includes an air classifier (19;22) able to sort out to large fractions of the material being ground.

3. A processing arrangement according to claim 1 or 2,
**characterised in, that** the said milling equipment (6) for said supplementary material is arranged to pregrind the supplementary material to a fineness of 100 - 300 microns.

4. A processing arrangement according to claim 1, 2 or 3,
**characterised in, that** the said milling equipment (9) for portland cement is arranged to pregrind the Portland cement to a fineness of an average particle size of 10 - 30 microns.

5. A processing arrangement according to claim 1, 2, 3 or 4,
**characterised in, that** the arrangement comprises a unit (2) for drying the supplementary material and fillers to a moisture content of less than 0.2 weigth%, which unit is located upstream of the milling equipment (6).

6. A processing arrangement according to claim 1, 2, 3, 4 or 5, **characterised in, that,** the arrangement comprises a unit (21) for carbon removal from fly ash, which unit is adapted to lower the carbon content in the fly ash below 4 weigth%.

## Patentansprüche

1. Verarbeitungsanordnung zum Herstellen von zementhaltigen Verbundmaterialien, wie beispielsweise hydraulisch gemischten Zementen mit einem bedeutend reduziertem Portlandschlackenmineralienanteil und korrespondierend mit einem erhöhten Anteil zusätzlicher zementhaltiger Mitmaterialien und hochreaktiven Puzzolanerden oder Mineralfüllstoffen, wie beispielsweise Flugasche, Blasofenschlacke, feinem Quarz, granitischem Minenfeinerz für einen direkten Ersatz von Portlandzement in Beton, mit einem Silo für Portlandzement, einem Silo für Flugasche oder andere Arten von Zusatzstoffen und einem Silo für Zementofenstaub oder andere Arten von die Abbindezeit regulierenden Wirkstoffen, mit einer Speichereinheit für Polymerzusatzstoffe, mit einer Portioniereinrichtung, einer Mischeinrichtung, Mahlvorrichtungen und Entladeeinrichtungen, **dadurch gekennzeichnet, dass** die Anordnung mit einer Mahleinheit (6) zum Vormahlen der Zusatzmaterialien und einer Mahleinrichtung (9) zum Vormahlen des Portlandzements ausgestattet ist, wobei den Vormahleinrichtungen (6, 9) eine Mahleinrichtung (13) zum Mahlen der vorgemahlenen Komponenten nachgeschaltet ist, und dass die Vormahleinrichtungen (6, 9) geeignet sind, als ein offener Kreislauf oder als ein geschlossener Kreislauf für die zu mahlenden Materialien zu arbeiten.

2. Verarbeitungsanordnung nach Anspruch 1, **dadurch gekennzeichnet, dass** der geschlossene Kreislauf eine Luftsortiervorrichtung (19; 22) aufweist, die geeignet ist, große Bruchstücke des gemahlenen Materials auszusortieren.

3. Verarbeitungsanordnung nach Anspruch 1 oder 2, **dadurch gekennzeichnet, dass** die Mahleinrichtung (6) für das Zusatzmaterial eingerichtet ist, um das Zusatzmaterial auf eine Feinheit von 100 bis 300 Mikron vorzumahlen.

4. Verarbeitungsanordnung nach Anspruch 1, 2 oder 3, **dadurch gekennzeichnet, dass** die Mahleinrichtung (9) für Portlandzement eingerichtet ist, um den Portlandzement auf einen Feinheitsgrad einer durchschnittlichen Teilchengröße von 10 bis 30 Mikron vorzumahlen.

5. Verarbeitungseinrichtung nach Anspruch 1, 2, 3 oder 4, **dadurch gekennzeichnet, dass** die Anordnung eine Einheit (2) zum Trocknen des Zusatzmaterials und von Füllstoffen auf einen Feuchtigkeitsgehalt von weniger als 0,2 Gewichtsprozent aufweist, wobei die Einheit prozessmäßig vor der Mahleinheit (6) angeordnet ist.

6. Verarbeitungsanordnung nach Anspruch 1, 2, 3, 4 oder 5, **dadurch gekennzeichnet, dass** die Anordnung eine Einheit (21) für eine Entfernung von Kohlenstoff aus der Flug-asche aufweist, wobei die Einheit geeignet ist, den Kohlenstoffanteil in der Flugasche auf unter 4 Gewichtsprozent abzusenken.

## Revendications

1. Installation de traitement pour la production de matériaux cimentaires composites, tels que des ciments composés hydrauliques ayant une teneur en minéraux de clinker Portland significativement réduite et, de manière correspondante, avec une quantité plus grande de matériaux cimentaires supplémentaires et de pouzzolanes ou charges minérales hautement réactives, comme par exemple les cendres volantes, 1e laitier de haut fourneau, le quartz fin, les poussières de carrières granitiques pour remplacer directement le ciment Portland en béton, comprenant un silo pour le ciment Portland, un silo pour les cendres volantes ou tout autre type de matériaux supplémentaires et un silo pour la poussière du four à ciment ou tout autre type d'accélérateur de prise à régulation dans le temps, une unité de stockage pour les additifs polymères, un moyen de dosage, un moyen de mélange, des dispositifs de concassage et un moyen de décharge,
**caractérisée en ce que**
l'installation est équipée d'une unité de broyage (6) pour pré-concasser les matériaux supplémentaires et d'un équipement de broyage (9) pour pré-concasser le ciment Portland, ces équipements de pré-concassage (6, 9) sont suivis d'un équipement de concassage (13) pour concasser les composants pré-concassés, et
l'équipement de pré-concassage (6, 9) est adapté pour fonctionner en circuit ouvert ou en circuit fermé pour le matériau en cours de concassage.

2. Installation de traitement selon la revendication 1,
**caractérisée en ce que**
le circuit fermé comprend un séparateur pneumatique (19; 22) capable de trier des fractions importantes du matériau en cours de concassage.

3. Installation de traitement selon la revendication 1 ou 2,
**caractérisée en ce que**
l'équipement de broyage (6) pour le matériau supplémentaire est agencé pour pré-concasser le matériau supplémentaire à une finesse de 100 à 300 microns.

4. Installation de traitement selon la revendication 1, 2 ou 3,
**caractérisée en ce que**
l'équipement de broyage (9) pour le ciment Portland est agencé pour pré-concasser le ciment Portland à une finesse de dimension moyenne des particules de 10 à 30 microns.

5. Installation de traitement selon la revendication 1, 2, 3 ou 4,
**caractérisée en ce que**
l'installation comprend une unité (2) pour sécher le matériau supplémentaire et les charges à un coefficient d'humidité inférieur à 0,2 % en poids, laquelle unité est située en amont de l'équipement de broyage (6).

6. Installation de traitement selon la revendication 1, 2, 3, 4 ou 5,
**caractérisée en ce que**
l'installation comprend une unité (21) pour la suppression du carbone dans les cendres volantes, laquelle unité est adaptée pour abaisser 1a teneur en carbone dans les cendres volantes en dessous de 4 % en poids.
